(19) Europäisches Patentamt
European Patent Office
Office européen des brevets

(11) Publication number: 0 089 215 A1

(12) # EUROPEAN PATENT APPLICATION

(21) Application number: 83301387.3

(22) Date of filing: 14.03.83

(51) Int. Cl.$^3$: G 08 B 19/02
G 09 F 13/16, G 01 K 11/16

(30) Priority: 13.03.82 GB 8207410

(43) Date of publication of application:
21.09.83 Bulletin 83/38

(84) Designated Contracting States:
AT BE CH DE FR IT LI LU NL SE

(71) Applicant: Stevens, Edward Raymond
Merredeigh, 34 The Lane West Mersea
Colchester Essex(GB)

(72) Inventor: Stevens, Edward Raymond
Merredeigh, 34 The Lane West Mersea
Colchester Essex(GB)

(74) Representative: Green, Alan James et al,
Sanderson & Co. 97 High Street
Colchester Essex C01 1TH(GB)

(54) **Hazard warning device.**

(57) The present invention relates to a hazard warning device, in particular to a device for displaying a visible warning of icy conditions.

The device of the invention comprises a display panel (11) having a warning legend defined by transparent (13, 14, 15) and opaque areas (12) of the panel (11). Disposed behind the display panel (11) there is at least one layer (16) having a light reflective property which changes with temperature, the layer (16) comprising thermochromic liquid crystal material. The display panel legend and reflective layer (16) or layers are arranged such that the device when disposed as a warning sign alongside a surface subject to icy conditions, e.g. a road surface, and by virtue of the colour changes with temperature exhibited by the liquid crystal material in the or each layer (16), displays on the display panel (11) a coloured warning legend against a contrasting background when such conditions are imminent or present. Otherwise the display panel (11) appears to be substantially of a uniform colour when viewed by reflected light.

EP 0 089 215 A1

./...

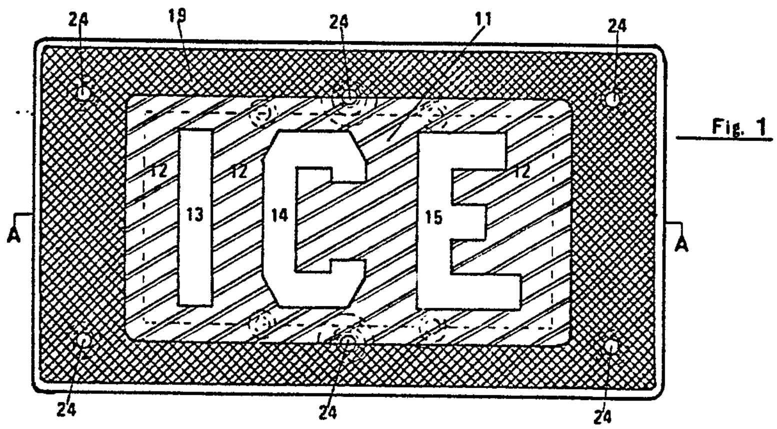

ICE
24
19
24
11
24
12
12
12
13
14
15
A
A
24
24
24


Fig. 1

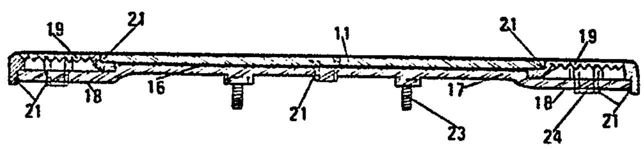

19
21
11
21
19
21
18
16
21
23
17
18
24
21


Fig. 2

"HAZARD WARNING DEVICE"

The present invention relates to a hazard warning device, in particular to a device for displaying a visible warning of icy conditions, for example, icy conditions relating to an adjacent road surface.

At the present time the warning signs in general use in the United Kingdom comprise the word "ICE", or the words "CAUTION - BLACK ICE", as a black painted legend upon a white background; this background being surrounded by a reflective red border, which in turn forms a statutory triangle. The legend remains visible at all times and does not change with alteration of temperature. These warning signs are usually displayed at known trouble spots and may be left in position summer and winter alike. In consequence, they are disregarded by drivers, and therefore contribute little to road safety.

I have now found that by providing a hazard warning device having a body member comprising a combination of a light-reflective layer and a light-absorbent layer, the light-reflective layer comprising a thermochromic liquid crystal material having a light-reflective property which changes when the ambient air temperature falls to or below that at which ice formation can occur, there may be produced a warning device of simple and robust construction which is capable of indicating to a vehicle driver that a condition exists whereby ice formation could occur or has already occurred, either upon the road surface or as freezing spray or fog, the

warning signal being visible only when such a condition exists and at no other time.

Accordingly, the present invention provides a device for displaying a visible warning of icy conditions, which device comprises a display panel having a warning legend defined by transparent and opaque areas of the panel, and disposed behind the display panel at least one layer having a light reflective property which changes with temperature and comprising thermochromic liquid crystal material, the interelationship between the display panel legend and reflective layer or layers being such that the device when disposed as a warning sign alongside a surface subject to icy conditions, and by virtue of the colour changes with temperature exhibited by the liquid crystal material in the or each layer, displays on the display panel a coloured warning legend against a contrasting background when such conditions are imminent or present, the display panel otherwise appearing to be substantially of a uniform colour when viewed by reflected light.

The warning device of the invention generally may be or provide part of a road sign. However, the device may also find application in other similar situations, for example, in connection with airport runways and railway tracks. Thus, while the device of the invention is described below particularly as a road sign, the invention is not limited to roadside use.

The device of the invention may be a road sign as such, and thus include means to support

the display panel above a roadside verge. The support means may comprise one or more poles, posts, bollards, legs or the like and should preferably give the display panel a height sufficient for its legend to be clearly visible to drivers and also to be within the range of vehicle lighting such as is used at night or during adverse weather conditions.

Alternatively, the device may be designed as a component for use in conjunction with an existing road sign or for attachment to other roadside furniture. In that case the device may include means to attach the device to existing roadside furniture.

In the device of the invention the warning legend is preferably defined by clear transparent and coloured opaque areas and the or each reflective layer is chosen so that together with those areas it permits the display panel to display the warning legend only when icy conditions are imminent or present. The legend displayed may comprise one or more symbols, numbers or letters and preferably comprises the word "ICE". Whatever legend is displayed as a warning under icy conditions, the legend should then always appear coloured when viewed by reflected light.

In order to provide for maximum reflectance the one or more reflective layers are preferably associated with a layer of light-absorbing material. Thermochromic liquid crystal materials transmit light which they do not reflect, and it is desirable that behind the reflective layer(s) there should be means to absorb any transmitted

light, typically a layer of black material, for example, graphite or gold black. In the description which follows the one or more reflective layers, optionally together with the preferred light-absorbing layer are referred to as a reflector.

The display panel and reflector may be constructed and arranged in various ways to achieve their intended purpose. Thus, the legend itself may be either clear or opaque and the layer or layers of thermochromic liquid crystal material may either change colour or change from clear to coloured or vice versa. The layer or layers of liquid crystal material may also be used in conjunction with other coloured layers, the only criteria to be observed being that the display panel should have an appearance of a uniform background colour at ambient temperature and should clearly display its legend by colour contrast under hazard conditions.

In one preferred embodiment the display panel defines a legend such as the word "ICE" by outlining a clear legend in a suitable first colour. The reflector is then chosen so that its colour at ambient temperature matches the first colour of the legend's outline, thus rendering the legend essentially invisible at ambient temperature. The reflector is also chosen so that it changes colour from the first colour to a second contrasting colour as the temperature drops to a hazard condition.

If desired the display panel may be outlined in a third colour. Thus, where the device comprises a road sign the perimeter of the sign may be provided with a warning colour such as red to indicate the general nature of the sign. Preferably, the perimeter of the sign is also constructed of a reflective material to highlight the display panel which it surrounds.

The thermochromic liquid crystal material used in the invention may comprise any suitable formulation. For example, the material may be a chiral-smectic C or cholesteric liquid crystal material, the latter being preferred. A cholesteric liquid crystal material at relatively high temperatures will be in an isotropic phase - i.e. it will be in a non-liquid-crystalline state - and will transmit all visible wavelengths of light. Thus the material will have no reflective properties at relatively high temperatures.

As the temperature drops, the material changes into acholesteric phase. In this phase, the molecules of the material may form a macromolecular helical structure having a certain helical pitch, and, given a favourable orientation of the helices with regard to the incident light, will reflect light of a wavelength which is directly proportional to the helical pitch.

The helical pitch of the structure will increase as the temperature decreases. Thus, the material may be formulated for use in the present invention so as to reflect light of one colour as

it enters the cholesteric phase at a temperature above 0°C, and reflect light of another colour at about 0°C or below.

As the temperature continues to drop, and the helical pitch increases further, the light reflected by the material will move into the non-visible infra-red, and the material will in most cases change into a smectic liquid crystalline phase in which it only transmits light. However, as the temperature approaches that of the chrolesteric to smectic phase transition, the helical pitch of the structure will generally increase at a faster rate: thus the material preferably should be so formulated that the phase transition occurs at a temperature of just below 0°C, for example, at from -0.1°C to -4.0°C. In this way, a rapid change of colour as the temperature appraoches 0°C may be achieved.

It will be appreciated that a road sign having a reflector consisting of a single layer of such a material is capable of conveying relatively precise information to a driver regarding the temperature of an adjacent road surface provided the temperature does not drop far below 0°C. In practice, however, it is desirable to provide a road sign having a reflector which is able to produce a reflection at all temperatures normally encountered on the road surface. This result may be achieved by employing a reflector comprising two separate layers of cholesteric liquid crystal material arranged substantially parallel to each other. The rearward of the two

layers (i.e. the one furthest from the display panel) may contain a material formulated as described above, whilst the forward layer may contain a material formulated so that it is in the non-reflective isotropic phase above 0°C, and reflects a colour as the material changes into the cholesteric phase at temperatures at about or below 0°C. The material preferably will continue to reflect that colour until a temperature is reached below those normally encountered on road surfaces, for example, down to -30°C.

The overall reflection obtained from a road sign containing a reflector consisting of two layers of material as above is simply the reflection from both layers combined. Thus, it will be appreciated that the combined reflection may be, for example, successively (as the temperature decreases) a base colour at above 0°C, a warning colour at about 0°C and a warning colour or an extra warning colour below 0°C.

Preferably the reflector employed is one which reflects one colour above 0°C, a second colour at about 0°C and a third colour below 0°C. This may be achieved by employing a reflector consisting of two layers of cholesteric liquid crystal material as described above, with the rearward layer containing a material which changes through only a small number of colours in the cholesteric phase.

The cholesteric liquid crystal materials employed in this invention may be formulated by mixing one or more cholesteric liquid crystal

compounds either together or with other non-thermochromic liouid crystal compounds in order to obtain a material which has a desired colour/temperature calibration and desired phase transition temperatures. Where two or more cholesteric liquid crystal compounds are mixed together in the same material, the compounds should be such that when in the cholesteric phase they have macro-molecular structures of the same helical twist-sense. Generally, the cholesteric liquid crystal compounds employed will be selected from the group known as chiral nematic liquid crystals, for example, from the chiral nematic liquid crystals disclosed in U.K. Patent Specifications Nos. 1,556,994, 1,592,161, 1,596,012, 1,596,013 and 1,596,014.

Examples of suitable chiral nematic liquid crystals are those falling within the following general formulae I-VI:

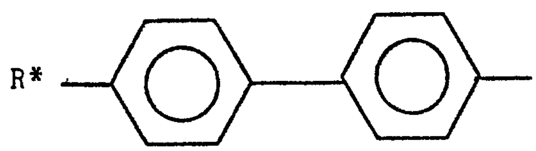

I

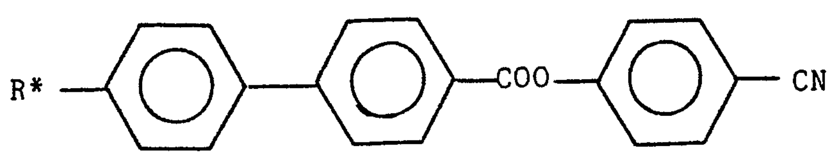

II

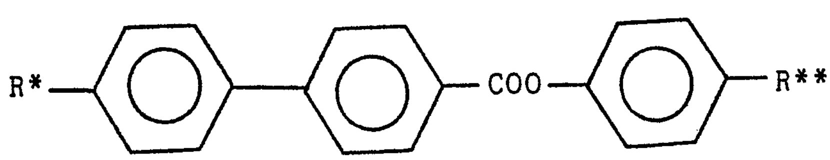

III

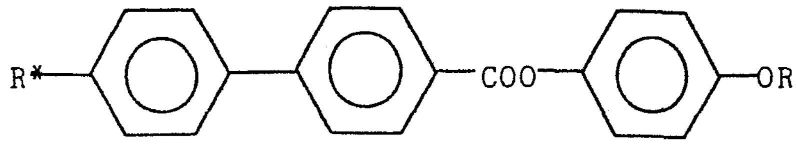

IV

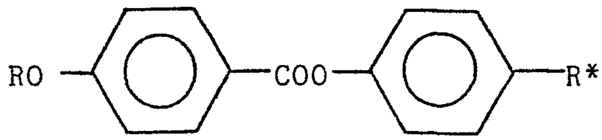

V

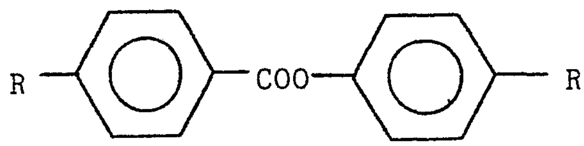

VI

(wherein R represents a straight or branched chain alkyl radical having up to twelve carbon atoms and R* and R**, which may be the same or different, each represent a chiral alkyl group of the formula $C_2H_5-CH(CH_3)-[CH_2]_m-$, in which m is an integer of from 1 to 4).

When in the cholesteric phase, cholesteric liquid crystal materials reflect light in a Bragg-like manner, reaching a theoretical maximum reflectance of 0.5 from a layer comprising a single material.

However, this maximum will only be approached if the helical axes within the macromolecular structure are uniformly aligned parallel to the incident radiation - any other orientation will result in reduced reflectance. Uniform alignment of the helices may be achieved by so constructing the reflector that the or each layer of cholesteric

liquid crystal material is in the so-called Grandjean state - viz. comprises of planes of molecules lying parallel to the surface of the layer.

Techniques for preparing reflectors having one or more layers of material in the Grandjean state are known. Generally each layer is supported in a transparent substrate, and each face of the substrate which is to contact the layer is especially treated so that the material becomes ordered in the Grandjean state upon contact with the substrate. Examples of such treatments are given below.

In order to achieve maximum reflectance when employing a reflector constructed as above, incident light should strike each layer of cholesteric liquid crystal material normal to the surface of the layer - that is, in alignment with the helical axes of the macromolecular structure. At a cost of a decrease in reflectance, which however is not dependent on the angle of incidence of light, reflectors which are especially durable may be constructed by depositing on the rear surface of the display panel or on a separate reflector panel to be disposed behind the display panel one or more layers comprising a suspension of the cholesteric liquid crystal material in a transparent polymer. Alternatively, a durable reflector may be formed by encapsulating droplets of the cholesteric liquid crystal material in gelatin/gum arabic, and then setting the capsules in a transparent polymer, which again mav be deposited as a layer on the rear of the displav panel or on a reflector panel. Both of the

above methods are known in the art, being described respectively in U.S. Patent Specification No. 3,872,050 and U.K. Patent Specification No. 1,161,039.

Where it is desired to construct a road sign with especially high reflectance, a construction employing a Grandjean layer of cholesteric liquid crystal material with incident light normal thereto may well be employed. However, greater gains in reflectance may be obtained by employing in place of every layer of a single cholesteric liquid crystal material:

(a) two such layers superimposed upon one another - each layer comprising a different material, which materials have opposite helical twist-senses but have temperature/colour calibrations and phase transition temperatures which are as similar as possible;

(b) two such layers, identical to each other and separated by a half wave plate, which reverses the sense of polarization of the incident light between the layers; or

(c) a single layer of encapsulated cholesteric liquid crystal material, one half of the capsules containing a different material to the other half - which materials have opposite helical twist-senses but have temperature/colour calibrations and phase transition temperatures which are as similar as possible.

Using the above methods, the maximum theoretical reflectance may be increased from 0.5 to 1.0, and

values of 0.8 can readily be achieved in practice.

The layers of cholesteric liquid crystal material employed in this invention will generally be from 10 μm to 40 μm thick.

The light-absorbing material may conveniently be provided as the rear layer of the reflector. Alternatively or additionally it may be deposited on a suitable backing surface of a casing to which the display panel and reflector may be fitted.

The panel and other components of the device of the invention may be constructed from any suitable material such as glass or plastics materials, for example, Perspex, polycarbonate or polyacrylate. The components may be formed by, for example, moulding, including injection moulding, or heat forming, and may provide a device comprising an assembly of a number of such moulded or shaped components, and including a layer of liquid crystal material. The layer of liquid crystal material may be encapsulated within a transparent substrate, which may be supported and secured behind the display panel or the layer of liquid crystal material may be coated directly on to the display panel or on to the surface of a reflector panel to be disposed behind the display panel.

The device of the invention may take a variety of shapes. For example, the display panel may be surrounded by a light reflective perimeter which may take the form of a rectangle, triangle or

circle of any suitable dimension.

The device of the invention is intended for use supported above a roadside verge or the like. When so disposed the device may be arranged so that the display panel and reflector are vertical, the visible warning then being seen directly by the relevant viewer, or alternatively the display panel and reflector, or the reflector alone, may be arranged other than in a vertical plane and employed together with means such as a mirror to bring the visible warning into an apparently vertical disposition.

Whilst a device in which the reflector is disposed in a vertical plane can provide an adequate warning of hazardous conditions in relation to ice formation, it may in practice be preferred to construct the device with the reflector arranged in such a manner as to provide a higher degree of accuracy. In that respect, I have found that in certain locations and under some weather conditions it is possible for there to be a temperature differential of up to about $3^{o}C$ between a vertical surface disposed at a height of about 1.5 metres and an adjacent road surface, especially after a clear frosty night. Thus, a vertical surface necessarily measures a compromise of air temperature, which in any event may not be the same as the temperature of a horizontal road surface some distance below.

I have also found, however, that a higher

degree of accuracy can be obtained by disposing the reflector in a horizontal plane, and by associating the reflector with a thermal block element to provide a compensating thermal circuit. With the reflector in a horizontal disposition the visible warning image can be brought into a vertical plane by arranging a mirror at an angle of 45° to the thus-disposed reflector.

In the above arrangement the reflector may be disposed with its reflecting face downwards or upwards, with the mirror respectively disposed below or above the reflector. In addition, the display panel may be disposed horizontally in front of the reflector or vertically in front of the mirror.

Preferably, however, the reflector is disposed with its reflecting face downwards, and the display panel is disposed horizontally in front of, i.e. below, the reflector. In that manner the thermal block element can be arranged behind and above the reflector to provide a compensating thermal circuit for maximum temperature control.

With such a preferred arrangement the panel and reflector, together with the thermal block element and the mirror are preferably assembled in a housing having a transparent window opposite the mirror. Such an assembly is preferably provided as a sealed unit in which the interior of the housing is under at least a partial vacuum. Preferably, also the housing

window is arranged in relation to the reflector so that when the reflector is horizontal the window is angled slightly forward out of the vertical plane to prevent spurious reflection from the window and frosting. In addition, the internal face of the window preferably should be treated to prevent condensation which could occur due to the temperature differential between the bodies of air adjacent the internal and external faces of the window.

By associating the reflector with a thermal compensator block the reflector can be made to "read" the temperature of the road surface rather than the actual temperature of the surrounding air at the level of the reflector. As will be appreciated icy roads are most hazardous when ice is formed during rapidly changing conditions, for example, as on a morning with a heavy early morning frost. Under those conditions the air temperature may be a number of degrees different from the road surface temperature and the reflector to be at its most useful should ideally "read" the actual road temperature.

I have found that a block of material which acts as a thermal barrier such as a block of wood chip or other febrous compound material under most conditions provides the necessary adjustment of the "reading" of the reflector. However, in certain circumstances the thermal compensator block may also comprise a more highly conductive material such as a ceramic compound or may be a coupler or conductor,

preferably a metal, for example, aluminium or steel.

The degree to which the thermal block element will be required to control the temperature of the reflector will depend on the height at which the reflector is disposed and the type of road or other surface of which the condition is to be displayed. In some cases the thermal block element will be required to conduct heat and in other cases to act as a barrier. Generally, however, for roadside use the thermal block element will be a heat barrier, and preferably will be made of wood chip or other fibrous compound material. Such a thermal block element is especially useful where the road surface is tarmacadam.

In the above arrangement the housing may be constructed of a plastics material e.g. rigid pvc, or metal e.g. aluminium or steel. Preferably, the housing window is formed of a polycarbonate material for strength and is treated to render it non-reflective. A similar treatment may be given to the display panel, especially where it is disposed vertically.

The invention will now be described by way of example with reference to the accompanying drawings, in which:

Figure 1 is a front view of one form of road sign,

Figure 2 is a cross-section along line A-A of Figure 1,

Figure 3 is a front view of another form of road sign,

Figure 4 is a cross-section along line B-B of Figure 3,

Figure 4(a) shows an enlarged detail in the region of the bolt of the device of Figure 4,

Figures 5(a) to 5(c) show in diagrammatic form various arrangement of reflector,

Figure 6 is a front view of a further form of road sign in accordance with the invention, with the support and face member omitted,

Figure 7 is a cross-section along line C-C of Figure 6, which also shows the support and face member,

Figure 8 is a plan view from below of the display panel and reflector of the road sign of Figures 6 and 7,

Figure 9 is a cross-section along line D-D of Figure 8, and

Figure 9(a) shows an enlarged detail of the cross-section of Figure 9.

Referring to Figures 1 and 2, the road sign shown comprises a display panel 11 which comprises opaque coloured areas 12 surrounding clear transparent areas 13, 14 and 15 which

together define the word "ICE". Disposed behind the panel 11 is a reflector 16 comprising a layer of liquid crystal material. The reflector 16 may be a layer of liquid crystal material encapsulated in a plastics skin and sandwiched between the panel 11 and a backing member 17. Alternatively, a layer of liquid crystal material including a suitable plastics binder may be coated on to the rear face of panel 11 or on to the inner face of backing member 17. Together with the reflective layer, reflector 16 also includes a layer of light-absorbing material coated either on the rear face of the reflective layer or on the inner face of member 17 behind any reflective layer or layers thereon.

At its edges the backing member 17 extends beyond the periphery of panel 11 so as to provide a flange 18 on which a reflective perimeter member 19, typically formed as a "corner cube" type of reflector, is carried. The panel 11 and members 17 and 19 may be formed of a plastics material e.g. a polyacrylate and the assembly of panel 11 and members 17 and 19 may be held together by applying adhesive along the joints 21 or by ultrasonic welding along those joints. The sign also includes means to enable it to be suitably mounted comprising threaded bolts 23 sunk into the rear of member 17 and bolt holes 24 at each corner and midway along the body of the sign.

Referring to Figures 3, 4 and 4(a), the road

sign shown comprises a conventional triangle 31 with, for example, a reflective red border 32, typically formed of the material sold under the name "Scotchlite". The red border 32 surrounds a background 34 of a different colour which in turn highlights a hazard warning exclamation mark 35 in a third colour, typically black, which, if desired could be so constructed and/or arranged also to change colour, but in a different sense, thereby to provide a "danger imminent" symbol. Inset in a central recess 36 is a display device 37 in accordance with the invention.

The display device 37 again comprises a panel 11 having opaque coloured areas 12, the colour of which may match the colour of background 34 or contrast with it. The areas 12 surround clear transparent areas 13, 14 and 15, and together with those areas define the word "ICE". Disposed behind the panel 11 is a reflector 38, together with a backing member 17 including sunken bolts 39 which pass through holes 41 in the rear of recess 36 to enable the panel and reflector combination to be fixed in position by means of nuts 42.

The combination of reflector 38 and member 17 may be as described for reflector 16 and member 17 of Figures 1 and 2. Alternatively, the reflector 38 may comprise e.g. as shown in Figure 4(a) one of the constructions shown in Figures 5(a) to 5(c). In addition, those constructions equally may be used in place of the construction of reflector 16 in the road sign of

Figures 1 and 2.

Referring to Figures 5(a) to 5(c), Figure 5(a) shows a reflector comprising a transparent substrate 40, for example, of a plastics material such as Mylar. A layer 41 comprising either a dispersion of a cholesteric liquid crystal material in a polymer (for example, polyurethane) or a dispersion of micro-capsules of, for example, gelatin and gum arabic each containing a cholesteric liquid crystal material and set in a polymer (again, for example, polyurethane), is deposited on the outer face of the substrate 40. Each kind of layer 41 may be deposited on the substrate 40 in a known way, for example, as described in U.S. Patent Specification No. 3,872,050 (where the layer is to consist of a dispersion in a polymer) or in British Patent Specification No. 1,161,039 (where the layer is to consist of micro-capsules set in polymer). The layer 41 in either case may be, for example, of from 10 to 30 μm thick. A layer 76 of light absorbing material, e.g. graphite or gold black, is deposited on the other face 42 of the substrate 40, and when the reflector-construction 16' is in place in the overall road sign, e.g. as shown in Figure 1, the layer 76 is adjacent to member 17.

Referring next to Figure 5(b), that shows a reflector-construction in which a layer 50, having a thickness, for example, of from 10 to 30 μm of cholesteric liquid crystal material is sandwiched between transparent substrates 51 and 52 (for example, of glass or plastics material).

A spacer ring 53, for example, of Mylar seals the layer 50.

The substrates 51 and 52 are treated before assembly in a known manner to produce homogeneous molecular alignment of the cholesteric liquid crystal material at the substrate surfaces, thus to ensure that the material is in the Grandjean state. For example, the substrate surfaces, where polymeric, may be unidirectionally rubbed, for example, with a soft tissue, or where consisting of glass they may be coated with an SiO or $MgF_2$ vapour stream directed at an angle of about $30^o$ to the substrate surface. A layer 76 of light-absorbing material is deposited on the other face of substrate 51.

The composition of a suitable cholesteric liquid crystal material for use in the reflector-constructions of Figures 5(a) and 5(b) is set out in Table 1 below:

Table 1

| Compound | Percentage by weight |
|---|---|
| 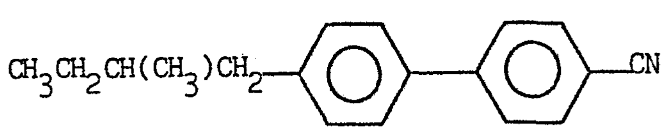 | 40 |
| 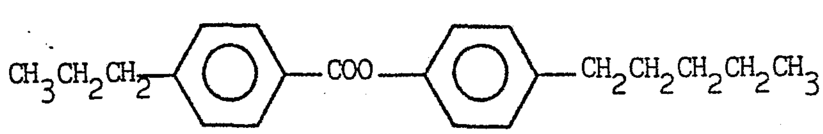 | 60 |

The composition of Table 1 transmits all wavelengths of visible light above $0^{\circ}C$ i.e. it is colourless when viewed by reflected light, and reflects blue at $0^{\circ}C$ or below.

Depending on the nature and temperature of the cholesteric liquid crystal material employed, light incident on the reflectors described above either will be absorbed, in which case the legend will appear black or, at an appropriate temperature, will be reflected by the respective layer or liquid crystal material back to a vehicle driver. The wavelength (and thus colour) of the reflected light will vary with temperature and the cholesteric liquid crystal material will be chosen so that a rapid change of colour with temperature occurs at or about $0^{\circ}C$. Thus, the possibility of ice-formation on the road surface will be indicated to a vehicle driver by the colour of light reflected by the road sign.

Any light not reflected by say layer 41 or layer 50 will be absorbed by the layer of light-absorbing material 76.

Where it is desired to have a road sign which will produce a reflection at all temperatures likely to be encountered, a second layer of a different cholesteric liquid crystal material may be included in the reflector-construction. Figure 5(c) shows an example of a reflector-construction, which contains two layers of cholesteric liquid crystal material.

The inner portion 61 of the reflector-construction shown in Figure 5(c) is identical to the reflector-construction of Figure 5(b), and like parts of the construction are given like reference numerals. The cholesteric liquid crystal material forming the layer 50 should be of a composition such that it reflects a colour, preferably other than blue above $0^{o}C$.

The outer portion 62 of the reflector-construction of Figure 5(c) has two transparent substrates 63 and 64 and an intervening spacer ring 65, all of which may be constructed of the materials indicated for the corresponding parts in the reflector-construction of Figure 5(b). The space formed between the substrates 63 and 64 by the spacer 65 is filled with a layer 66 of a second cholesteric liquid crystal material in the Grandjean state. The layer 66 is relatively thick, for example, from 30-40 μm, and the outer portion 62 may be constructed so that the layer 66 is in the Grandjean state by the methods described hereinbefore.

The cholesteric liquid crystal material of the layer 66 is formulated so as to have a cholesteric/ isotropic phase transition temperature of about $0^{o}C$. The material is clear above this temperature and coloured below, the colour observed with a drop in temperature to about $0^{o}C$ being, for example, blue.

At temperatures of above about $0^{o}C$, light falling on the reflector-construction of Figure 5(c) is transmitted through the layer 66 to the layer 50 where a colour, for example,

other than blue will be reflected. The reflected light will be transmitted through layer 66, and thus by the road sign. However, when the ambient temperature falls below about $0^{o}C$, blue light is strongly reflected by the layer 66. All other light is transmitted through to the layer 50, where (depending on the precise temperature) light of a suitable colour may be reflected to join the blue light reflected by layer 66, or the layer 50 may be non-reflective.

In a modification of the reflector construction shown in Figure 5(c), the substrates 52 and 63 may be replaced by a single piece of substrate common to both of the layers 41 and 66.

Other reflector-constructions containing two layers of different cholesteric liquid crystal material may be obtained by making each of the layers in either of the forms described with reference to Figure 5(a). The layers may be deposited on opposite faces of the same substrate or on separate substrates, or one may be deposited on a substrate and the other on the rear face of the display panel or on the inner face of a backing panel or casing.

It will be appreciated from the above that the device of the invention may be constructed as an independent sign incorporating reflective outer borders which can be mounted on any existing post or bollard, or, on its own mounting system. Alternatively, the device may be constructed as a temperature sensitive cell which

may be fixed by its fixing bolts, either within a recess in a conventional sign or directly to any suitable flat surface. Furthermore, while the above description is given in terms of a reflector that shows Blue as its reflected light, i.e. as its warning colour, reflectors reflecting any colour of the spectrum may be constructed by suitable formulation of the liquid crystal materials and layers employed.

As will also be appreciated, if the display panel is coloured to match the liquid crystal material whilst in the cholesteric phase, e.g. Green/Yellow, and the legend "ICE" is left clear and transparent, then the colour Green/Yellow will be seen through the transparent legend, provided that the liquid crystal material, which may be encapsulated, is in suitable close contact with the rear face of the display panel. In this state the legend "ICE" will not be visible to a driver in a passing vehicle. Under hazard conditions, however, that is once the liquid crystal material passes through its transition phase at about $0^{\circ}C$ and reflects say Red/Blue, then the new reflected colour will be visible through the transparent legend and by contrast with the unchanged background will clearly be seen as the warning word "ICE". Then, when the temperature rises again and the liquid crystal material reverts to its cholesteric phase, the legend "ICE" will no longer be visible.

Referring to Figures 6 to 9(a), as before

the road sign shown comprises a display panel 11 with areas 12 to 15 together defining the word "ICE". Again, disposed behind the panel 11 is a reflector 16, which as shown in Figure 9(a) may be constructed as described for the arrangemert of Figure 5(a) above. In this embodiment, however, the combination of panel 11 and reflector 16 are disposed horizontally with the panel 11 below the reflector 16.

Arranged below the panel 11 at an angle of $45^{\circ}$ to the horizontal is a mirror 81. The mirror is supported on a rear wall 82, which together with a domed member 83, side walls 84 and 85, and a front wall 86 form a housing for the panel/reflector/mirror arrangement. Also within the housing is a thermal block member 87 disposed behind and above the reflector 16. To provide good reflectance the inside surfaces of walls 84 and 85 are white.

Depending on the material form which the member 87 is constructed, the reflector 16 may require separation therefrom. Accordingly, as shown in the detail of Figure 9(a) a separator layer 88 e.g. of polycarbonate such as that sold under the name "Mylar" or polyethylene sheeting may be provided. As indicated above the member 87 is typically made of wood chip or other fibrous compound material which could adversely affect the reflector 16 in the absence of separator layer 88.

The assembly of panel 11, reflector 16 and

thermal block member 87 is suspended from the domed member 83 via fixing points 89 and 90, for example, by using rivets or bolts. The domed member then in its turn is fixed, for example, by glueing or welding to the rear, side and front walls 82, 84, 85 and 86, with gaskets 91 and 92 being disposed between the front wall 86 and the adjacent domed member 83 and back wall 82 respectively.

The front wall 86 is transparent and shaped so that it provides an effective window into the housing set at a slight angle e.g. $15^{\circ}$ to $25^{\circ}$, to the vertical. In that manner spurious reflection can be eliminated and the front face 93 of the window protected from frost. In addition, a shoulder 94 (which is of necessity provided to set the necessary angle) permits transmitted light to enter the housing from above.

The wall 86 includes a flange around the whole of its periphery as illustrated by upper flange portion 95 and lower flange portion 96 in Figure 7. That peripheral flange includes various fixing points 97 whereby the housing may be fixed within an aperture 98 in an overall road sign face member 99.

If desired the member 99 may be supported on poles at each of its side edges. Alternatively, as shown in Figure 7, where the sign is relatively small the whole arrangement may be mounted via a sleeve 101 attached to rear wall 82, and positioned over a vertical pole 102.

In use the image of the display panel reflector combination is seen by reflection in mirror 81. While this inverts the image, and therefore the combination itself is disposed inverted as shown in Figure 8 to correct this, otherwise the arrangement functions as described above, except that the thermal block member 87 provides an adjustment of the temperature to bring it nearer to the actual road surface temperature. In that respect, the domed member 83 is shaped to a point 103 so that by virtue of the thus-provided inclined surfaces it is better able on the one hand to receive radiation from any direction, and on the other hand to dispel rain water. In the latter respect rain water draining from member 83 may be utilized to wash the front face 93 of the window by providing holes, slots or other apertures through flange 95 and member 99 where member 83 meets flange 95.

The devices of the present invention, for example, as described above offer the following particular advantages:

a) They are reliable and stable over widely varying ambient conditions and even when the temperature drops well below zero the liquid crystal layer can continue to provide a warning.

b) The necessary sharp temperature/colour threshold is repeatable even after prolonged exposure to extreme weather conditions.

c) The unique optical properties of cholesteric chiral nematic liquid crystals enable high

efficiency chromatic reflectors to be constructed which because they do not rely on absorption are able to reflect up to about 80% of the incident light of a particular wavelength.

d) The necessary colour change is rapid and the purity of the reflected colour is high.

The coloured areas 12 of the display panel may be provided by any suitable printing, stencilling, masking or like technique, and their colour may be applied to either or both faces of the panel. To facilitate application of a suitable reflective layer or layers to the rear face of the display panel or to the inner face of the backing member, where such a layer or layers are employed, the legend may be formed so that it stands proud of the remainder of the surface which forms the background.

The present invention also includes a thermochromic liquid crystal composition, which composition comprises a compound of the formula VI defined above, together with one or more compounds of the formulae I to V defined above, in particular at least one compound of the formula I. Preferably, such a composition includes more than 50% by weight of the compound of formula VI, more preferably about 55% to about 65% by weight.

## CLAIMS

1. A device for displaying a visible warning of icy conditions, which device comprises a display panel having a warning legend defined by transparent and opaque areas of the panel, and disposed behind the display panel at least one layer having a light reflective property which changes with temperature and comprising thermochromic liquid crystal material, the interelationship between the display panel legend and reflective layer or layers being such that the device when disposed as a warning sign alongside a surface subject to icy conditions, and by virtue of the colour changes with temperature exhibited by the liquid crystal material in the or each layer, displays on the display panel a coloured warning legend against a contrasting background when such conditions are imminent or present, the display panel otherwise appearing to be substantially of a uniform colour when viewed by reflected light.

2. A device according to claim 1 which includes means to support the display panel above a roadside verge at a height sufficient for its legend to be clearly visible to drivers and within the range of vehicle lighting.

3. A device according to claim 1 for use in conjunction with roadside furniture which includes means to attach the device to roadside furniture.

4. A device according to any one of the preceding claims wherein the warning legend is defined by

clear transparent and coloured opaque areas and the or each reflective layer is chosen so that together with those areas it permits the display panel to display the warning legend only when icy conditions are imminent or present.

5. A device according to any one of the preceding claims, wherein the one or more reflective layers are associated with a layer of light-absorbing material, preferably a layer of black material.

6. A device according to any one of the preceding claims, wherein the display panel defines the warning legend by outlining a clear legend in a suitable first colour and the reflective layer or layers, together with any layer of light-absorbing material, are chosen so that their colour at ambient temperature matches the first colour of the legend's outline, thus rendering the legend essentially invisible at ambient temperature, and so that there is a change of colour from the first colour to a second contrasting colour as the temperature drops to a hazard condition.

7. A device according to any one of the preceding claims, wherein the display panel is outlined in a third colour, the perimeter of the device preferably being constructed of a reflective material to highlight the display panel which it surrounds.

8. A device according to any one of the preceding claims, wherein the thermochromic liquid crystal material comprises a cholesteric liquid

crystal material preferably one formulated so that the cholesteric to smectic phase transition occurs at a temperature of just below 0°C whereby there is a rapid change of colour as the temperature approaches 0°C.

9. A device according to any one of the preceding claims having two separate layers of cholesteric liquid crystal material arranged substantially parallel to each other, the rearward of the two layers containing a material formulated so that the cholesteric to smectic phase transition occurs at a temperature of just below 0°C whereby there is a rapid change of colour as the temperature approaches 0°C, and the forward layer containing a material formulated so that it is in the non-reflective isotropic phase above 0°C, and reflects a colour as the material changes into the cholesteric phase at temperatures at about or below 0°C, and preferably continues to reflect its colour down to -30°C.

10. A device according to any one of the preceding claims, wherein the display panel and reflective layer or layers, together with any layer of light absorbing material are arranged in a planar configuration.

11. A device according to any one of the preceding claims, wherein the reflective layer or layers are essentially disposed either vertically or horizontally.

12. A device according to claim 11, wherein the reflective layer or layers are disposed essentially horizontally and associated with a thermal block element to provide a compensating thermal circuit,

and the visible warning image is brought into an essentially vertical plane by arranging a mirror at an angle of about 45$^{o}$ to the reflective layer or layers, the display panel and the reflective layer or layers preferably both being disposed horizontally with the display panel beneath the reflective layer or layers, and with the thermal block element disposed over the combination and above any layer of light absorbing material.

13. A device according to claim 12, wherein the display panel and reflective layer or layers, together with the thermal block element and the mirror are assembled in a housing having a transparent window opposite the mirror, the assembly preferably being provided as a sealed unit in which the interior of the housing is under at least a partial vacuum.

14. A device according to claim 12 or claim 13, wherein the thermal block element either provides a thermal barrier, and preferably comprises wood chip or other fibrous compound material or a ceramic compound or is a coupler or conductor and preferably comprises a metal, for example, aluminium or steel.

15. A thermochromic liquid crystal composition, which composition comprises a compound of the formula:

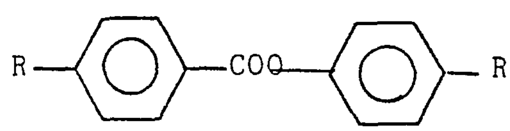

VI

wherein R represents a straight or branched chain alkyl radical having up to twelve carbon atoms,

together with one or more compounds of the formulae:

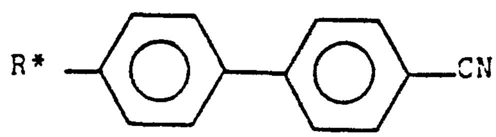
I

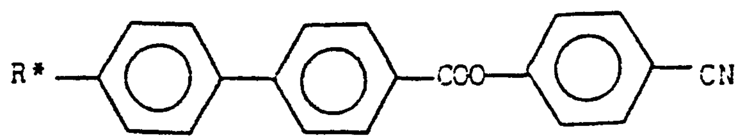
II

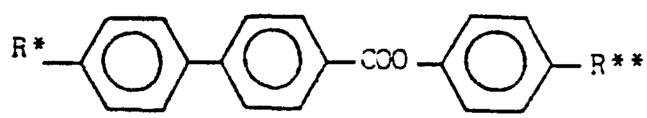
III

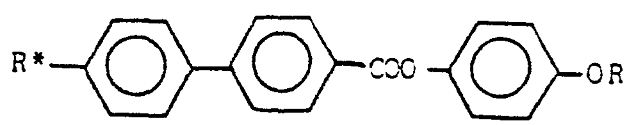
IV

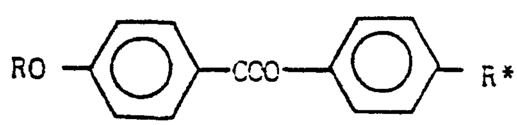
V

wherein R is as defined above and R* and R**, which may be the same or different, each represent a chiral alkyl group of the formula $C_2H_5-CH(CH_3)-[CH_2]_m-$, in which m is an integer of from 1 to 4,

in particular at least one compound of the formula I, the composition preferably including more than 50% by weight of the compound of formula VI, more preferably about 55% to about 65% by weight thereof.

Fig. 1

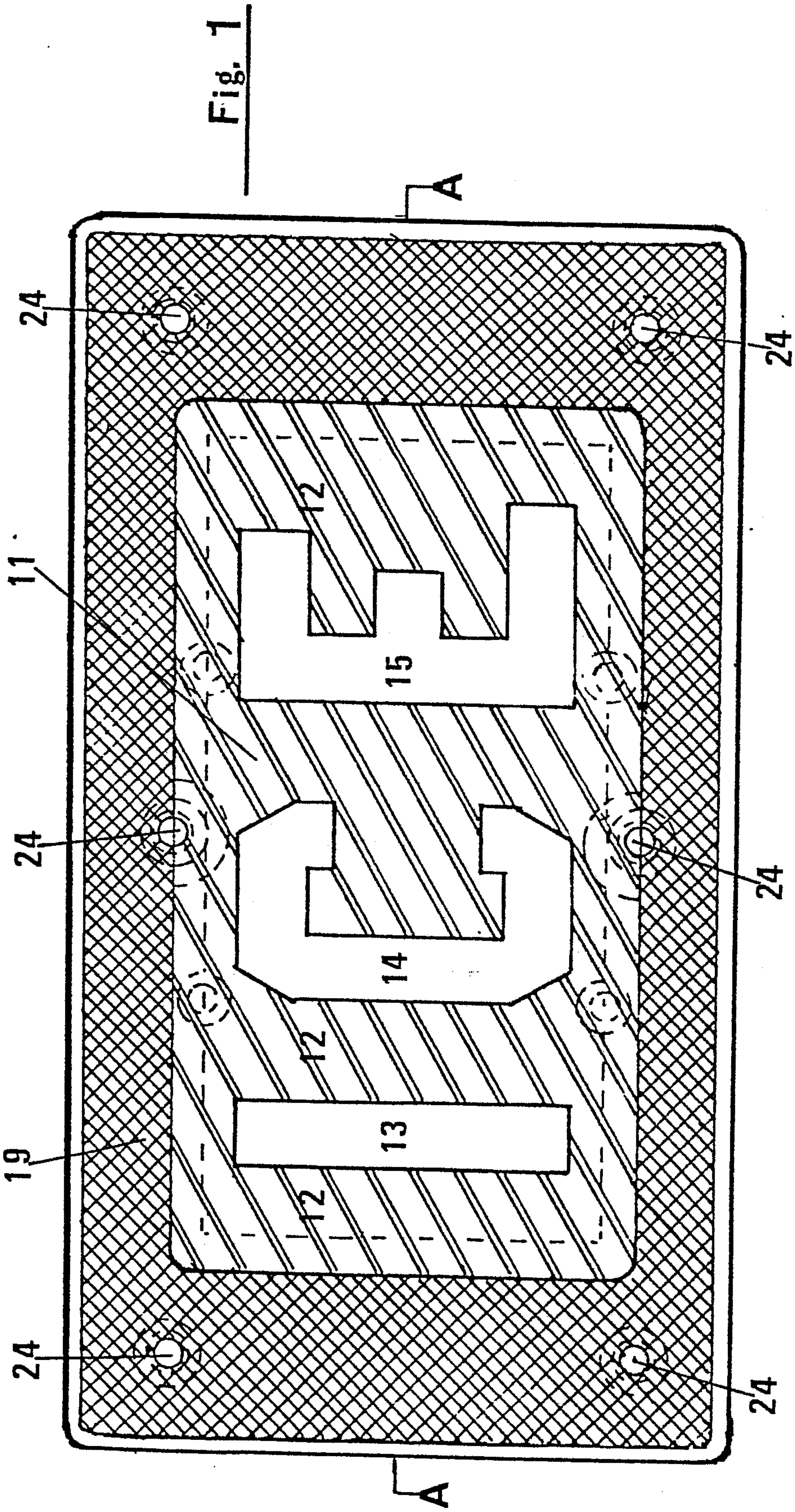
A
A
11
12
12
12
13
14
15
19
24
24
24
24
24
24

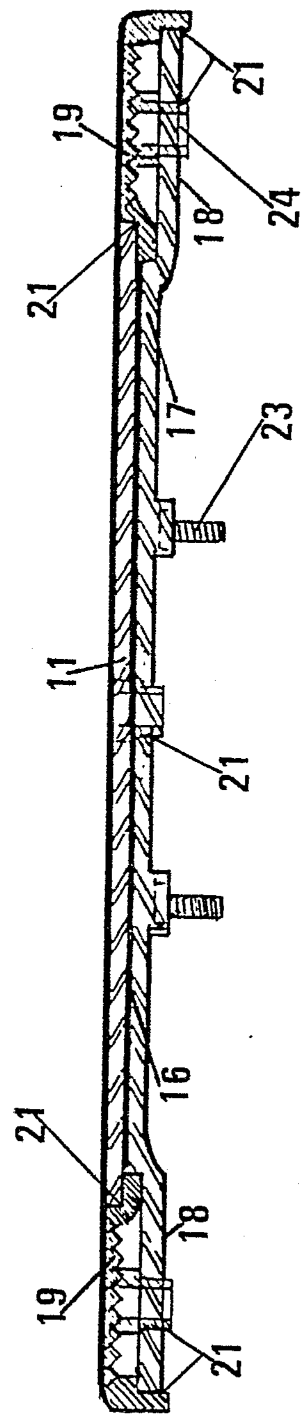
11
16
17
18
18
19
19
21
21
21
21
21
23
24

Fig. 2

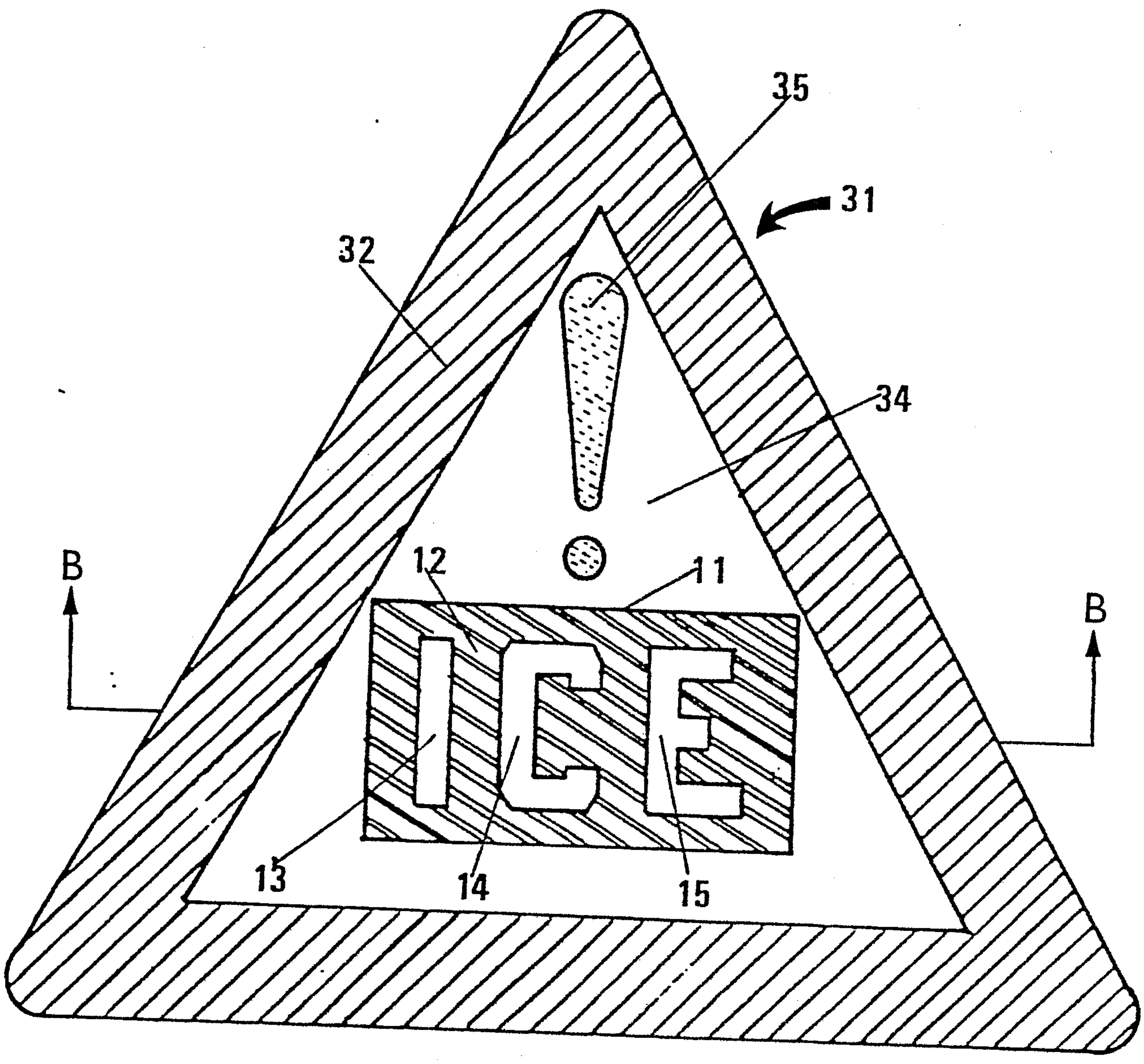


Fig. 3

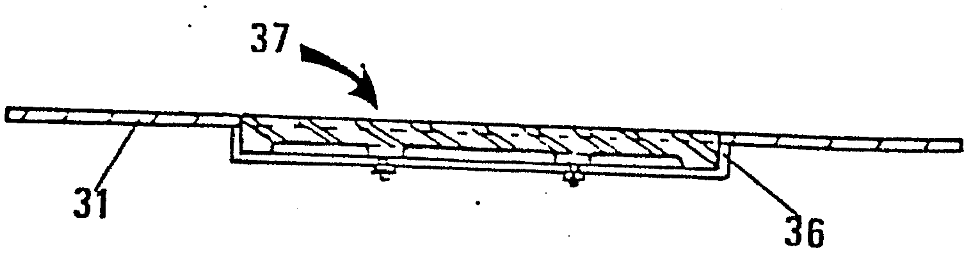


Fig. 4

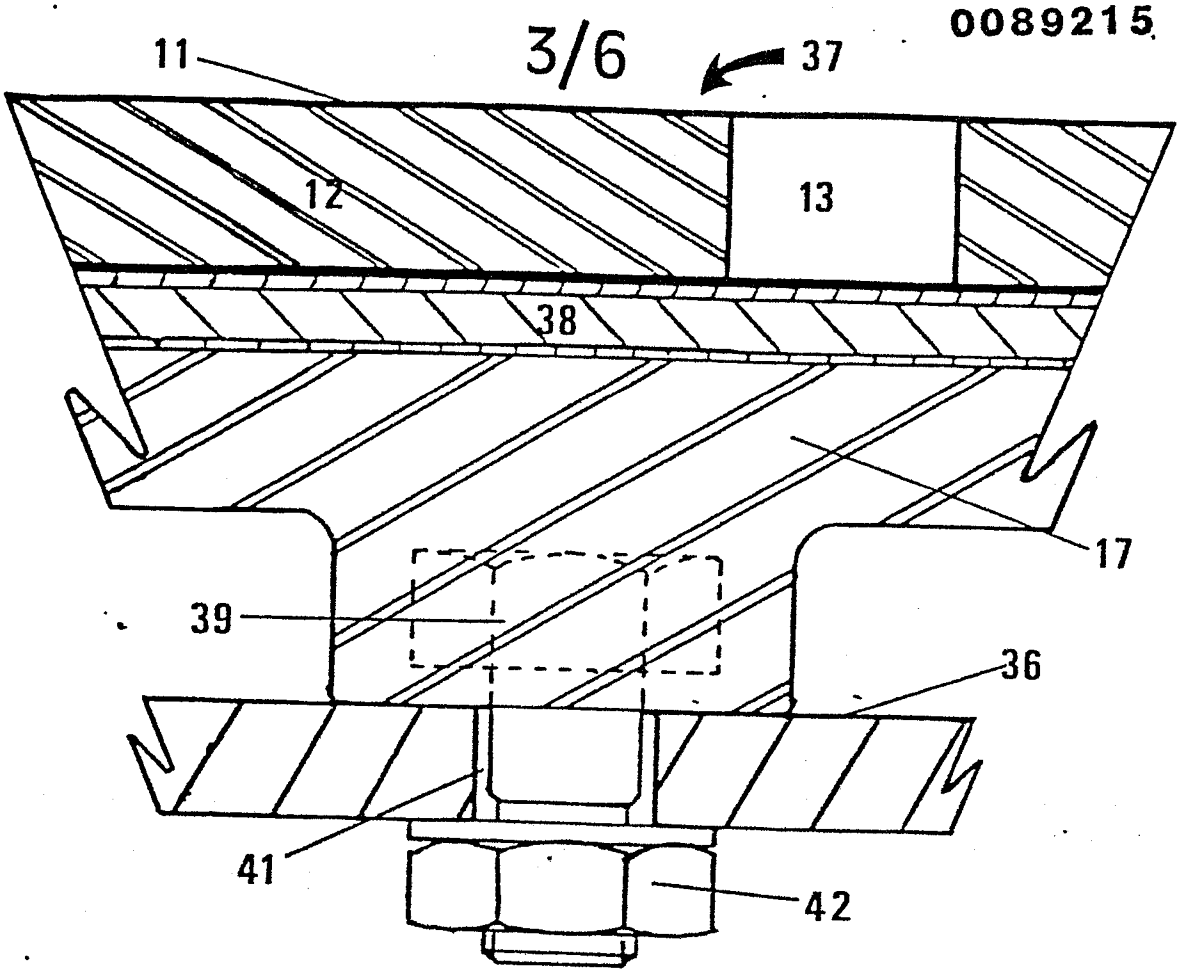


Fig. 4a

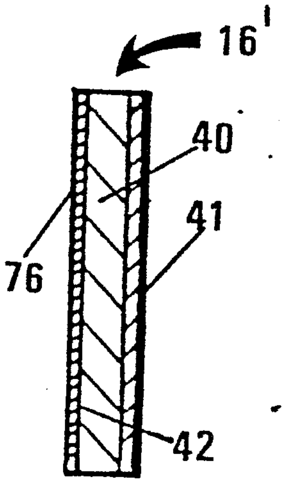


Fig. 5a

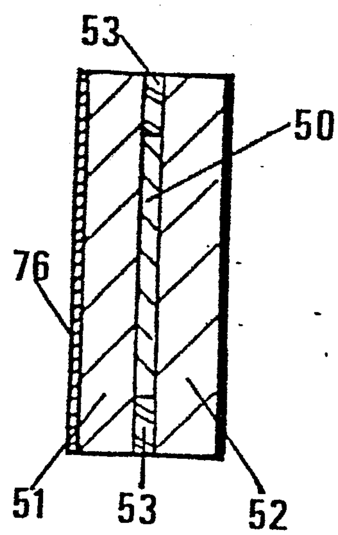


Fig. 5b

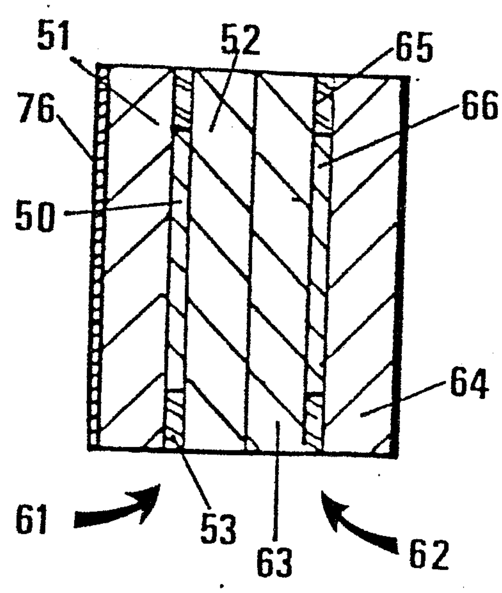


Fig. 5c

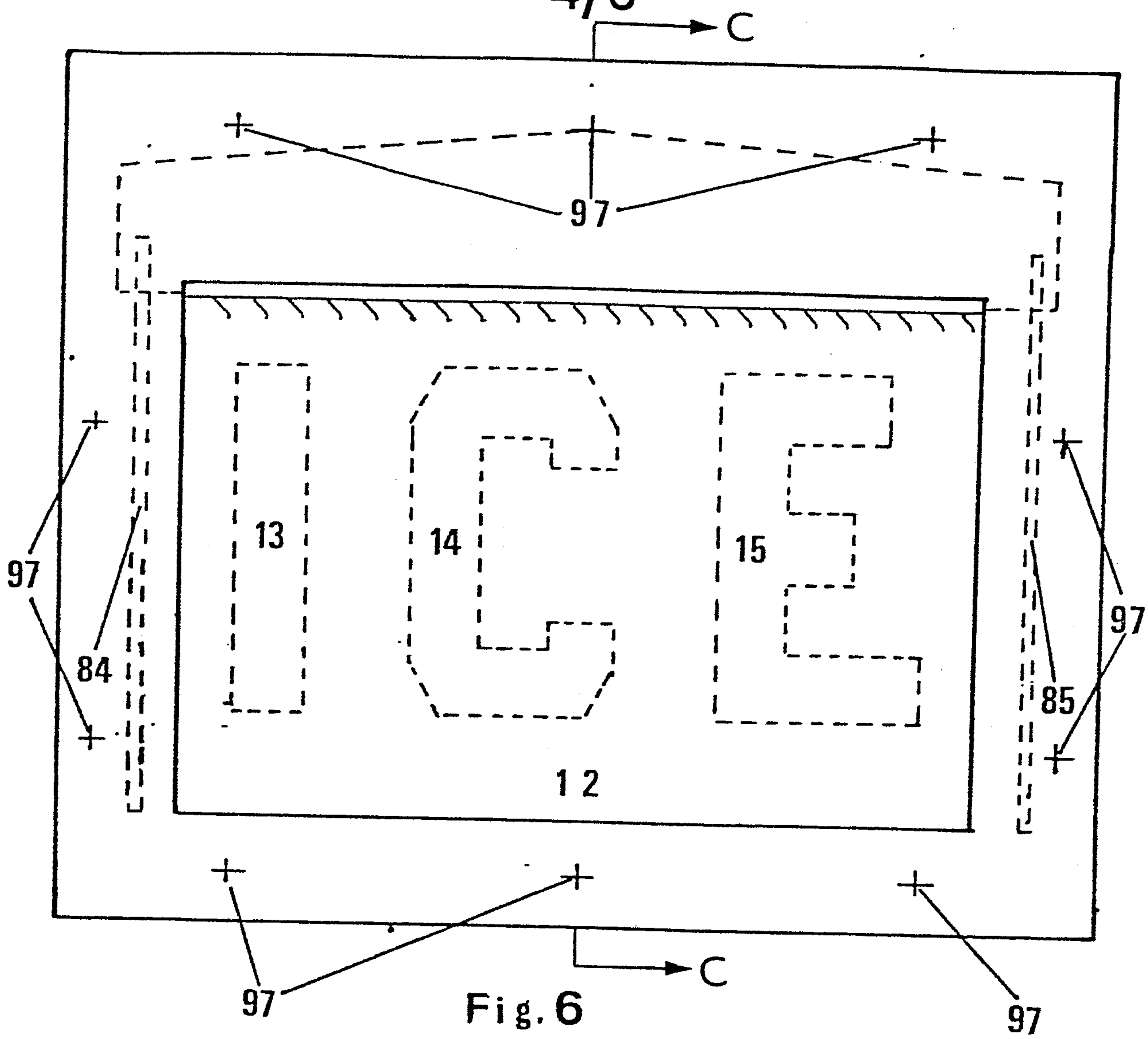


Fig. 6

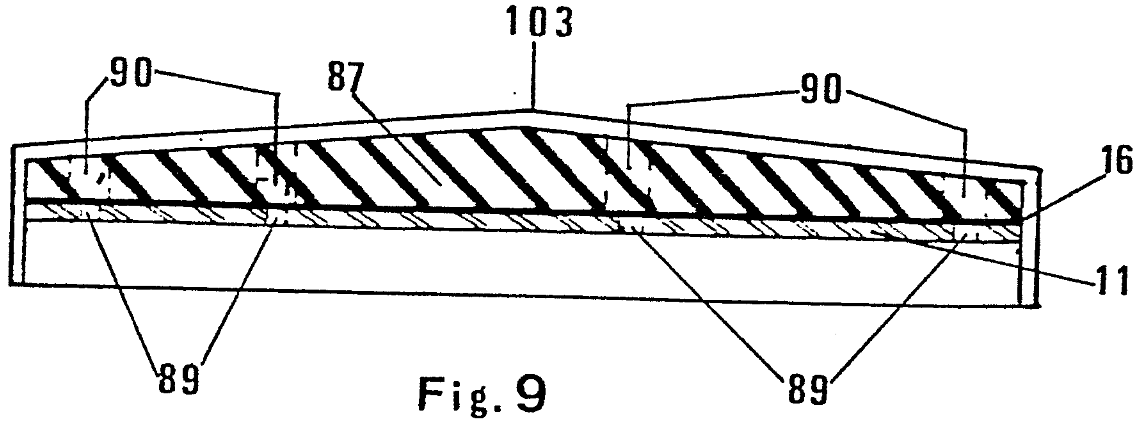


Fig. 9

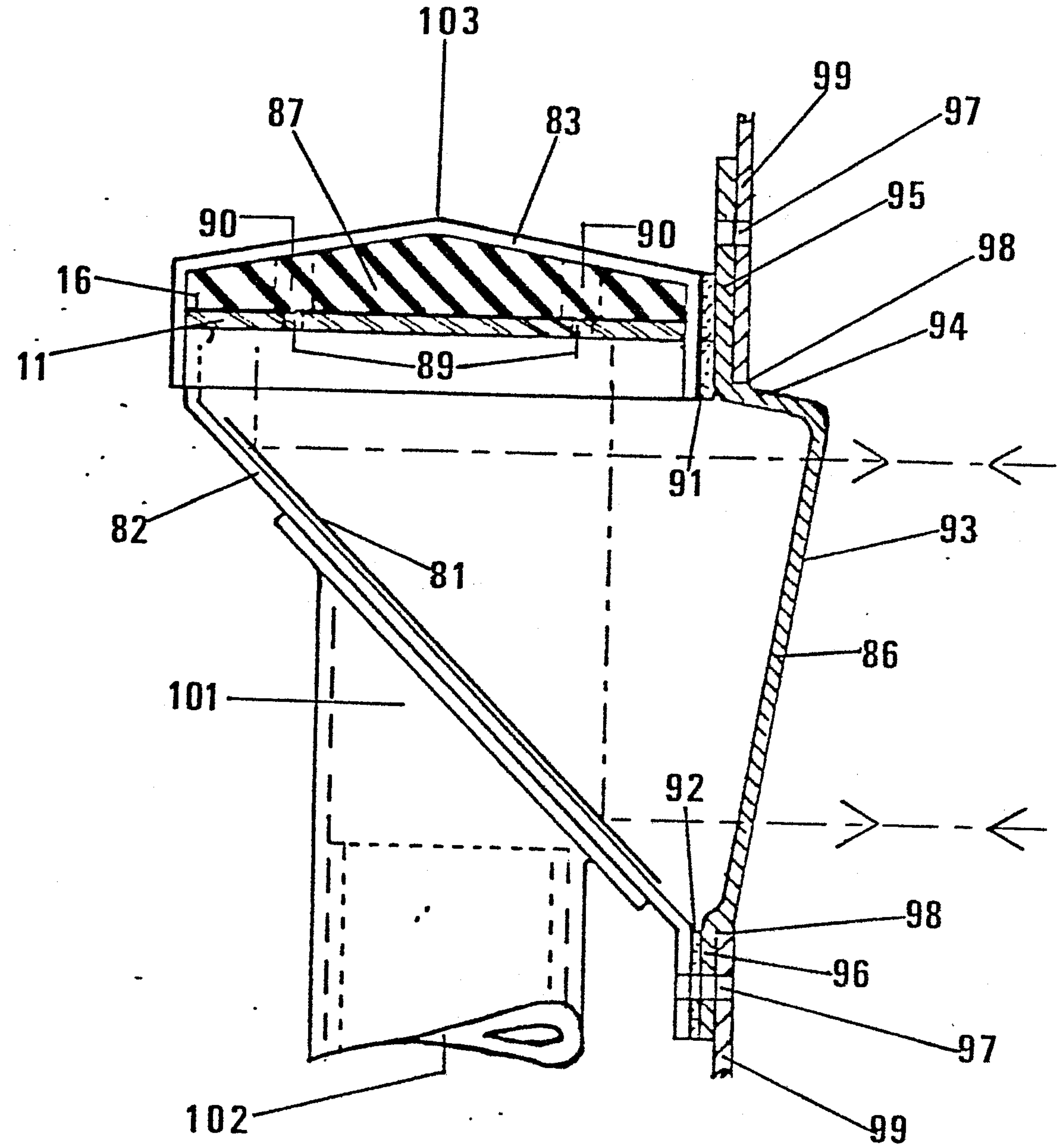
103
99
97
87
83
95
90
90
98
16
94
11
89
91
82
93
81
86
101
92
98
96
97
102
99

Fig. 7

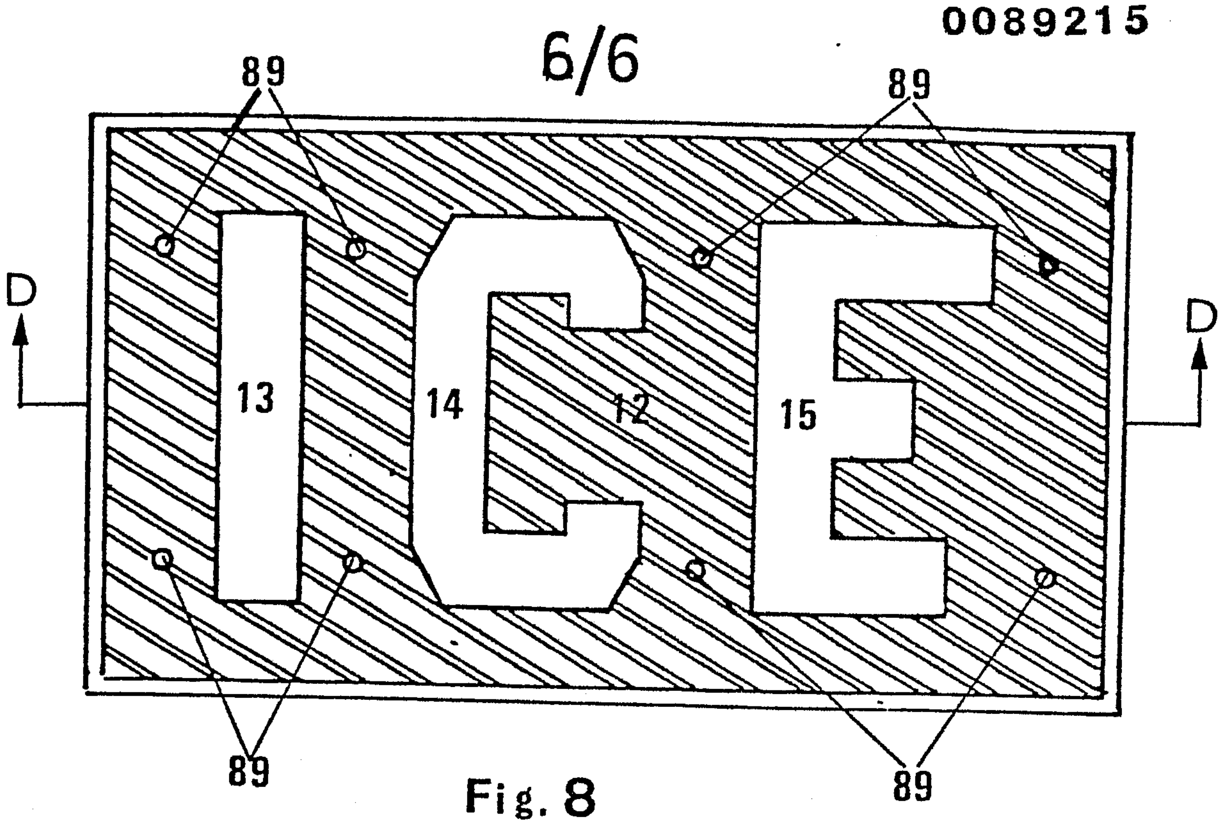


Fig. 8

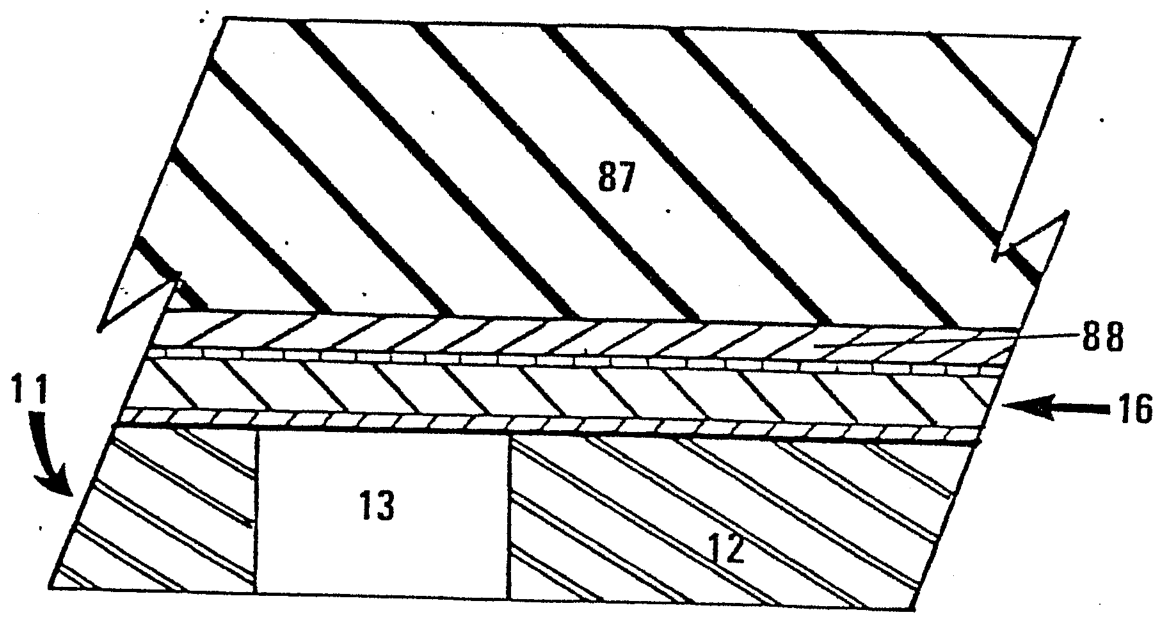


Fig. 9a

European Patent Office

# EUROPEAN SEARCH REPORT

0089215
Application number

EP 83 30 1387

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,Y | GB-A-2 083 244 (D.G. McDONNEL)<br>* Page 2, lines 9-20 * | 1-3,5 8,9,14 ,15 | G 08 B 19/02<br>G 09 F 13/16<br>G 01 K 11/16 |
| Y | DE-A-2 940 205 (K.G. REINSCH)<br>* Page 4, paragraph 1 - page 5, paragraph 1 * | 1-3,5 14 | |
| Y | EP-A-0 033 525 (W. WEILER)<br>* Page 5, paragraphs 2-3 * | 1-3,14 | |
| Y | EP-A-0 034 298 (M. FRASCHINI)<br>* Page 2, lines 30-34 * | 8,9,15 | |
| A | DE-U-8 120 919 (SIEMENS AG)<br>* Whole document * | 11-13 | |

TECHNICAL FIELDS SEARCHED (Int. Cl. 3)

G 01 K 11/00
G 01 K 13/00
G 02 B 5/00
G 02 F 1/13
G 08 B 19/02
G 09 F 9/35
G 09 F 13/16

The present search report has been drawn up for all claims

| Place of search | Date of completion of the search | Examiner |
|---|---|---|
| BERLIN | 02-06-1983 | BOTTERILL K.J. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document